# EUROPEAN PATENT SPECIFICATION

(11) **EP 3 793 849 B1**
(45) Date of publication and mention of the grant of the patent: **23.07.2025**
(21) Application number: 19730546.9
(22) Date of filing: 16.05.2019
(51) Int. Cl.: B60J 11/04

(54) **PROTECTIVE SHEET FOR CARS AND PROCEDURE FOR MAKING SAID PROTECTIVE SHEET**
SCHUTZFOLIE FÜR AUTOS UND VERFAHREN ZUR HERSTELLUNG DIESER SCHUTZFOLIE
TOILE DE PROTECTION POUR VOITURES ET PROCÉDÉ DE FABRICATION DE LADITE TOILE DE PROTECTION

(30) Priority: 17.05.2018 IT 201800005465
(43) Date of publication of application: 24.03.2021
(73) Proprietor: Goodwool S.r.l., 20154 Milano (IT)
(72) Inventor: GASPARONI, Christian, 10151 Torino (IT); GERMANETTI, Giovanni, 20145 Milano (IT)
(74) Representative: Iannone, Carlo Luigi
(86) International application number: PCT/IB2019/054055
(87) International publication number: WO 2019/220381

(56) References cited:
- CN-A- 103 419 612
- CN-A- 103 419 612
- CN-A- 105 774 503
- CN-A- 105 774 503
- CN-C- 100 387 455
- US-A1- 2011 156 436
- US-A1- 2011 156 436
- EXACTFLAT: "Boat Cover (Flattening)", 24 March 2015 (2015-03-24), pages 1 - 2, XP054978877, Retrieved from the Internet <URL:https://www.youtube.com/watch?v=uzVaYp-OXLk> [retrieved on 20181116]
- EXACTFLAT: "Boat Cover (Flattening)", 24 March 2015 (2015-03-24), pages 1 - 2, XP054978877, Retrieved from the Internet <URL:https://www.youtube.com/watch?v=uzVaYp-OXLk> [retrieved on 20181116]

## Description

The present invention relates to a protective sheet for cars.

Protective sheets for cars of the known type are generally made of polyester and are available in different sizes as a function of the dimensions of the car to be covered or are manufactured on the basis of paper patterns prepared starting from measurements of the car taken by hand by an operator.

Such protective sheets of the known type are not however free from drawbacks, including the fact that they are not fireproof, and therefore they cannot be applied to the car until the car has cooled down sufficiently.

Another drawback of such protective sheets of the known type consists of the fact that they tend to withhold humidity inside the sheet itself and therefore to create condensation inside the car. An excessively humid environment is harmful to the correct maintenance of the car.

In particular the polyester widely used for manufacturing the aforesaid sheets is not a material that allows the transpiration of air. Therefore, the only way to be able to allow a certain degree of transpiration consists of enlarging the meshes of the weft of the polyester sheet, but to the detriment of the capacity thereof to protect the car below from external agents. An example of a protective sheet is disclosed in US 2011/156436 A1.

The aim of the present invention is to provide a protective sheet for cars that overcomes the limits of the prior art, allowing better protection of the car, in all environmental conditions.

Within this aim, an object of the present invention is to provide a protective sheet for cars that is fireproof and hygroscopic.

Another object of the invention is to provide a protective sheet that is antistatic and antibacterial.

A further object of the invention is to provide a protective sheet that is capable of providing the broadest guarantees of reliability and safety when used.

The aim disclosed above and the mentioned objects and others that will appear more clearly below, are reached by a protective sheet for cars as recited in claim 1.

Further characteristics are envisaged in the dependent claims.

Further features and advantages shall be more apparent from the description of a preferred, but not exclusive, embodiment of a protective sheet for cars, illustrated by mere way of non-limiting example with the aid of the accompanying drawings, in which:

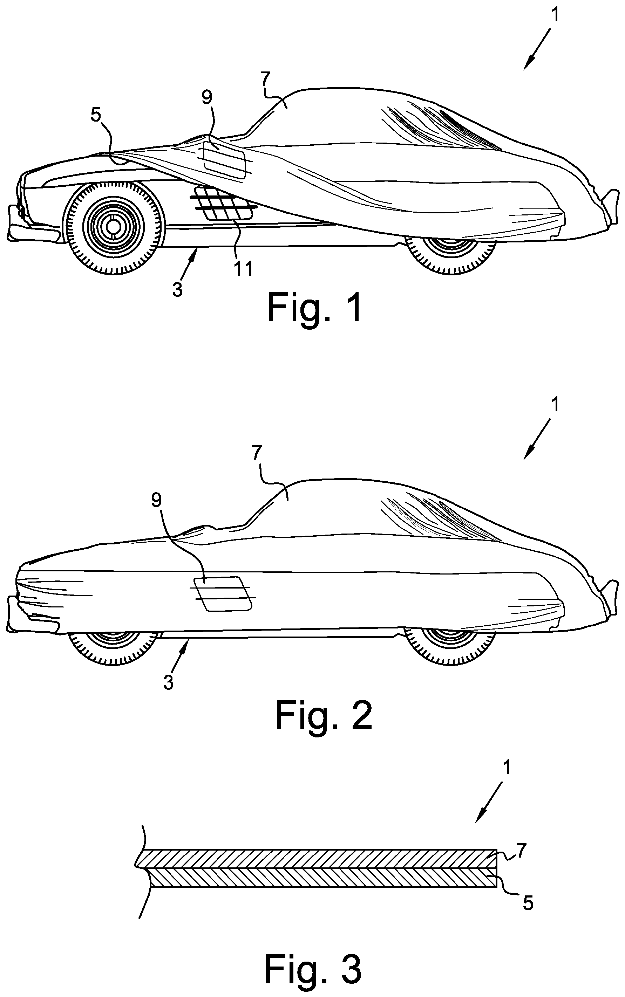

Figure 1 is a side view of a protective sheet according to the invention partially applied to a car;
Figure 2 is a side view of a protective sheet according to the invention applied to a car;
Figure 3 is a partial schematic and sectional view of a protective sheet according to the invention.

With reference to the mentioned figures, a protective sheet for cars is indicated overall by reference number 1, and it is shaped so as to cover a car 3 at least from above and laterally.

According to the invention, the protective sheet 1 comprises at least two mutually coupled layers 5, 7. A first layer 5, internal, adapted to face the car 3, is at least partly made of wool, while a second layer 7, external, is made of a polymeric material.

Advantageously, the first, internal, layer 5 is completely and exclusively made of wool.

According to the invention, the first, internal, layer 5 is at least partly made of merino wool.

Preferably, the first, internal, layer 5 is made of 100% merino wool jersey.

Advantageously, the second layer 7, external, is made of an elasticized polymeric material and can comprise a polyamide and an elastomer.

Preferably, the second layer 7 is composed of a jersey of about 75% polyamide and about 25% elastomer.

The second layer 7 may be at least partly made of spandex (or elastam).

Advantageously the second layer 7 is subjected to an anti-drip treatment, e.g. of the Teflon immersion type.

According to the invention, the protective sheet 1 comprises a polyurethane adhesive suitable for mutually coupling the first layer 5 with the second layer 7.

According to the invention, the polyurethane adhesive is distributed on the surface of one of the two layers 5, 7 intended to be coupled with a corresponding surface of the other layer 7, 5, according to a grid of distribution spots.

Wool is a material with high hygroscopic capacity. In fact, it is generally able to withhold up to 18% of its own weight in water. Therefore, the presence of an internal layer 5 of wool allows the relative humidity inside the passenger compartment of the car 3 to be maintained within an optimal interval, comprised between 40% and 60%.

The maintenance of such microclimate with controlled humidity inside the protective sheet 1 is advantageous both when the environmental climate is too dry, as it prevents the seals and leathers present in the car 3 from drying out, and when the environmental climate is too humid, as it prevents the formation of rust and mould.

Furthermore, wool is fireproof and therefore it is not necessary to wait for the car 3 to cool down completely before applying the protective sheet 1 thereto, in order to prevent the formation of fires.

The internal wool layer 5 also confers antistatic and antibacterial properties to the protective sheet 1.

Furthermore, the internal wool layer 5 is anti-scratch and therefore makes it possible to guarantee optimal protection of the bodywork of the car 3.

The second layer 7, made of an elasticized polymeric material, allows the protective sheet 1 to adhere to the bodywork of the car 3, letting the first wool layer 5 transpire.

Advantageously, also the distribution of the spots of polyurethane adhesive for the coupling between the two layers 5, 7 is such as to leave the transpiration of the protective sheet 1 unaltered.

Advantageously, the second layer 7 is aesthetically customizable, e.g. through sublimation printing, or through ink jet printing, or even through the application of personalized transfers.

For example, as illustrated in the appended figures, it is possible to customize the external layer 7 by printing graphic elements 9 thereon which reproduce corresponding aesthetic and/or technical elements 11 of the car 3.

Advantageously, the anti-drip treatment of the external layer 7 also allows drops of water or grease to run off, without however inhibiting the transpirability of the protective sheet 1.

The present disclosure also relates to an unclaimed process for manufacturing a protective sheet 1 for cars, comprising the following steps:
- having a three-dimensional virtual model of a car 3;
- obtaining from the three-dimensional virtual model of the car 3 a three-dimensional virtual model of the protective sheet 1;
- transforming i.e. "levelling" the three-dimensional virtual model of the protective sheet 1 into one or more two-dimensional virtual drawings;
- having a first layer 5 of a material made at least partly of wool;
- having a second layer 7 of a polymeric material;
- reciprocally coupling the two layers 5, 7 to obtain a semi-finished sheet;
- cutting the semi-finished sheet according to the one or more two-dimensional virtual drawings;
- shaping and sewing the cut semi-finished sheet according to said one or more two-dimensional virtual drawings to obtain the protective sheet 1.

Advantageously the step of obtaining from the three-dimensional virtual model of the car 3 a three-dimensional virtual model of a protective sheet 1 comprises the step of defining, on the three-dimensional virtual model of the protective sheet 1, a plurality of cutting and stitching lines defining the contours of said one or more two-dimensional virtual drawings.

Essentially, the protective sheet 1 is drawn by means of 3D modelling techniques starting from a solid model of the car 3, directly defining on the three-dimensional virtual model of the protective sheet also the arrangement of the stitching lines of the various pieces of fabric that will compose the protective sheet 1. Starting from such three-dimensional virtual model of the sheet, the two-dimensional virtual drawings are then generated, through a processing program, on the basis of which an automatic cutting machine will cut the fabric obtained from the coupling of the two layers 5, 7.

Subsequently, the various pieces of fabric are sewn together along the cutting lines, until the final shape of the protective sheet is composed.

Advantageously, the manufacturing process can comprise a step of printing graphic elements 9 onto the semi-finished sheet, e.g. a sublimation printing step, or an ink jet printing step, or even a step of applying personalized transfers.

The process for manufacturing a protective sheet for cars allows any car to be covered to measure, very precisely. In particular, such process allows both a tailored protective cloth to be manufactured, which precisely follows the shapes and dimensions of the car to be covered, and a completely customizable protective sheet from a graphics point of view.

It has in practice been noted how the protective sheet for cars, according to the present invention, solves the predefined aim and objects as it allows the car to be very effectively protected from multiple external factors.

In particular, the protective sheet, according to the invention, is hygroscopic, and therefore it keeps the relative humidity inside the car constant.

Furthermore, wool is fireproof and therefore it prevents the risk of fire.

A further advantage of the protective sheet, according to the invention, consists of the fact that it is transpirable, and therefore allows ventilation and hence the bodywork of the car to be always kept dry.

Another advantage of the protective sheet, according to the invention, consists of the fact that it thermally insulates the car, and therefore reduces temperature extremes. In fact, wool is an optimal natural insulator.

A further advantage of the protective sheet, according to the invention, consists of the fact that it is anti-scratch and also protects against finer dust.

Again, the protective sheet, according to the invention, consists of the fact that it prevents the accumulation of electrostatic energy.

Yet another advantage of the protective sheet, and in particular of the process for manufacturing it consists of the fact that a customizable protective sheet is manufactured to measure for the specific car, therefore able to cover it extremely precisely, following its general outline and the shape of the details and being graphically decorated as preferred, e.g. by accurately reproducing the livery of the car.

## Claims

1. Protective sheet (1) for cars shaped so as to cover at least from above and laterally a car (3), comprising at least two mutually coupled layers (5, 7), a first layer (5), internal, adapted to face said car (3), being at least partly made of wool, a second layer (7), external, being made of a polymeric material, **characterized in that** said first layer (5) is at least partly made of merino wool; the protective sheet (1) further comprising a polyurethane adhesive suitable for mutually coupling said first layer (5) and said second layer (7); the polyurethane adhesive being distributed on the surface of one of the two layers (5, 7) intended to be coupled with a corresponding surface of the other layer (7, 5), according to a grid of distribution spots.

2. Protective sheet (1) according to claim 1, **characterized in that** said first layer (5) is completely and exclusively made of wool.

3. Protective sheet (1) according to one or more of the preceding claims, **characterized in that** said second layer (7) is made of an elasticized polymeric material.

4. Protective sheet (1) according to one or more of the preceding claims, **characterized in that** said second layer (7) is made of a material comprising a polyamide and an elastomer.

5. Protective sheet (1) according to one or more of the preceding claims, **characterized in that** said second layer (7) is subjected to an anti-drip treatment.

## Patentansprüche

1. Schutzfolie (1) für Autos, die so geformt ist, dass sie ein Auto (3) zumindest von oben und seitlich abdeckt, und die mindestens zwei miteinander gekoppelte Schichten (5, 7) umfasst, wobei eine erste, innere Schicht (5), die ausgebildet ist, um dem Auto (3) zugewandt zu sein, zumindest teilweise aus Wolle besteht, und eine zweite, äußere Schicht (7) aus einem Polymermaterial besteht, **dadurch gekennzeichnet, dass** die erste Schicht (5) zumindest teilweise aus Merinowolle besteht; wobei die Schutzfolie (1) ferner einen Polyurethan-Klebstoff umfasst, der geeignet ist, die erste Schicht (5) und die zweite Schicht (7) miteinander zu koppeln; wobei der Polyurethan-Klebstoff auf der Oberfläche einer der zwei Schichten (5, 7), die mit einer entsprechenden Oberfläche der anderen Schicht (7, 5) gekoppelt werden soll, gemäß einem Raster von Verteilungspunkten verteilt ist.

2. Schutzfolie (1) nach Anspruch 1, **dadurch gekennzeichnet, dass** die erste Schicht (5) vollständig und ausschließlich aus Wolle besteht.

3. Schutzfolie (1) nach einem oder mehreren der vorhergehenden Ansprüche, **dadurch gekennzeichnet, dass** die zweite Schicht (7) aus einem elastischen Polymermaterial besteht.

4. Schutzfolie (1) nach einem oder mehreren der vorhergehenden Ansprüche, **dadurch gekennzeichnet, dass** die zweite Schicht (7) aus einem Material besteht, das ein Polyamid und ein Elastomer umfasst.

5. Schutzfolie (1) nach einem oder mehreren der vorhergehenden Ansprüche, **dadurch gekennzeichnet, dass** die zweite Schicht (7) einer Antitropfbehandlung unterzogen wird.

## Revendications

1. Toile de protection (1) pour voitures façonnée de manière à recouvrir au moins par le dessus et latéralement une voiture (3), comprenant au moins deux couches (5, 7) mutuellement couplées, une première couche (5), interne, conçue pour faire face à ladite voiture (3), étant au moins partiellement constituée de laine, une seconde couche (7), externe, étant constituée d'un matériau polymère, **caractérisée en ce que** ladite première couche (5) est au moins partiellement constituée de laine mérinos ; la toile de protection (1) comprenant en outre un adhésif polyuréthane approprié pour le couplage mutuel de ladite première couche (5) et de ladite seconde couche (7) ; l'adhésif polyuréthane étant réparti sur la surface de l'une des deux couches (5, 7) destinée à être couplée à une surface correspondante de l'autre couche (7, 5), selon un maillage de points de répartition.

2. Toile de protection (1) selon la revendication 1, **caractérisée en ce que** ladite première couche (5) est entièrement et exclusivement constituée de laine.

3. Toile de protection (1) selon l'une ou plusieurs des revendications précédentes, **caractérisée en ce que** ladite seconde couche (7) est constituée d'un matériau polymère rendu élastique.

4. Toile de protection (1) selon l'une ou plusieurs des revendications précédentes, **caractérisée en ce que** ladite seconde couche (7) est constituée d'un matériau comprenant un polyamide et un élastomère.

5. Toile de protection (1) selon l'une ou plusieurs des revendications précédentes, **caractérisée en ce que** ladite seconde couche (7) est soumise à un traitement anti-gouttes.
